# EUROPEAN PATENT SPECIFICATION

(11) **EP 2 979 479 B1**
(45) Date of publication and mention of the grant of the patent: **05.02.2020**
(21) Application number: 13713850.9
(22) Date of filing: 28.03.2013
(51) Int. Cl.: H04W 16/08, H04W 92/20, H04W 16/04, H04W 16/10, H04W 36/00

(54) **METHOD FOR ADJUSTING CELL COVERAGE BASED ON CELL COVERAGE INDICATOR**
VERFAHREN ZUR ANPASSUNG DER ZELLENFUNKABDECKUNG ANHAND EINES ZELLFUNKABDECKUNGSINDIKATORS
PROCÉDÉ D'AJUSTAGE DE LA COUVERTURE D'UNE CELLULE EN UTILISANT UN INDICATEUR DE COUVERTURE

(43) Date of publication of application: 03.02.2016
(60) Divisional application: 19204979.9
(73) Proprietor: Huawei Technologies Co., Ltd., Longgang District Shenzhen, Guangdong 518129 (CN)
(72) Inventor: OLOFSSON, Henrik, S-90315 Burea (SE); LEGG, Peter, S-17569 Jarfalla (SE)
(74) Representative: Thun, Clemens
(86) International application number: PCT/EP2013/056669
(87) International publication number: WO 2014/154277

(56) References cited:
- US-A1- 2008 144 528
- US-A1- 2009 067 339
- CATT: "Some considerations on SON for AAS", 3GPP DRAFT; R3-130048, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Malta; 20130128 - 20130201 18 January 2013 (2013-01-18), XP050670871, Retrieved from the Internet: URL:http://www.3gpp.org/ftp/tsg_ran/WG3_Iu /TSGR3_79/Docs/ [retrieved on 2013-01-18]
- CHINA UNICOM: "Consideration on Inter-RAT MRO&MLB Coordination", 3GPP DRAFT; R3-120159 CONSIDERATION ON INTER-RAT MRO&MLB COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 30 January 2012 (2012-01-30), XP050566511, [retrieved on 2012-01-30]
- HUAWEI: "Impact of coverage change on SON", 3GPP DRAFT; R3-130608 SON FOR AAS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Chicago, USA; 20130415 - 20130419 5 April 2013 (2013-04-05), XP050700575, Retrieved from the Internet: URL:http://www.3gpp.org/ftp/tsg_ran/WG3_Iu /TSGR3_79bis/Docs/ [retrieved on 2013-04-05]
- ALCATEL-LUCENT ET AL: "Discussion on non-overlapped scenario energy saving implementation", 3GPP DRAFT; R3-120274, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 31 January 2012 (2012-01-31), XP050566708, [retrieved on 2012-01-31]
- NEW POSTCOM: "Discussions on Non-Overlapping Inter-eNB Energy Saving Scenario", 3GPP DRAFT; R3-121113 NONOVERLAPPINGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20120521 - 20120525, 12 May 2012 (2012-05-12), XP050611224, [retrieved on 2012-05-12]

## Description

### Technical Field

The present invention relates to a method for transmitting and receiving information in a cellular wireless communication system. Furthermore, the invention also relates to a method in a cellular wireless communication system, a method in a second network control node a second network control node and a computer program.

### Background of the Invention

For example, US 2009/0067339A1 refers to a method for controlling cell coverage and a system for enabling the method.

Further, document R3-130048, 3GPP TSG RAN WG3 meeting #79, refers to considerations about a SON for AAS.

Further, prior art document R3-120159, 3GPP TSG-RAN WG3 Meeting #75 refers to considerations on Inter-RAT MRO&MLB Coordination. This document introduces a coverage indicator IE indicated a coverage overlap between a first cell and a second cell.

Further, prior art document R3-120274, 3GPP TSG RAN WG3 #75 refers to a discussion on non-overlapped scenario energy saving implementations. Further, prior art document R3-121113, 3GPP TSG RAN WG3 Meeting #76 refers to a discussion on a non-overlapping inter-eNB energy saving scenario.

Cellular wireless communication networks are built by individual cells. A larger coverage is achieved by allowing mobile terminals (such as UEs) to move between these cells. In order to do so, the operator normally plans the network for contiguous coverage with a reasonable overlap between the cells to enable the UEs to maintain the connection by handing over the connection between cells while moving in the network.

Coverage in cellular systems can mean different things. In general, coverage refers to locations where the signal quality is good enough to enable communication between mobile stations and base stations. Downlink and uplink coverage may differ, but it is the target for cell planning to achieve both. The downlink coverage can also be separated into reference signals, common downlink channels, shared channels and dedicated channels. For example, normally reference signals are measured during mobility measurements. Downlink common channels are needed to read system information transmitted in each cell, which are used to determine how to access the cell. In the access phase, the uplink is used, and after that the common, shared or dedicated signals are used to transmit dedicated signalling and data to the mobile station. Hence, when coverage is modified, the same changes can be applied to all channels, or to only some. In some scenarios, we may for example need to modify the coverage of only the reference signals.

In 3GPP there has been considerable study into Self-Organising Networks (SON) for LTE. One part of this is the Handover Parameter Optimisation aka Mobility Robustness Optimisation (MRO) which is aiming at optimising mobility parameters. MRO is expected to optimize the parameters to a) meet a specified handover failure rate target, and b) minimize the number of handover events whilst meeting this target value. Many studies have shown that handover failure rate reduction and handover count reduction are contradictory requirements; if the failure rate is reduced the handover count increases and vice versa. Requirements (a) and (b) reflect the fact that meeting the failure rate is of higher priority. MRO should not engineer a failure rate below the target because this will cause more handovers than if the failure rate was equal to the target value. The MRO algorithm is normally designed to perform small adjustments very infrequent, in order to collect enough statistics before performing a change. An example of a collection time is 24 hours. The reason for not adjusting so frequently is to preserve the system stability. The algorithm may also be adjusted to allow for larger changes in an initial phase and smaller and less frequent changes in a more mature stage, with the assumption that as the system gets more mature, the need for optimisation is reduced.

Another part of SON is the Automatic Neighbour Relation (ANR) which is aiming at identifying neighbour cells in order to allow the use of these cells for mobility. When a UE reports an unknown cell in the mobility measurements, the eNB can ask the UE to perform additional measurements to retrieve the unique identity (ECGI) and enough information to set up a connection (X2) to this cell. The eNB may then also use a network mechanism to retrieve the transport layer address for this unknown neighbour before sending an X2 setup message. The step of requesting additional information from the UE is not as straightforward as it may appear. The acquisition of the additional information requires one additional step of measurement configuration, measurements and reporting. The additional time required for this may be critical, if the UE is on the border of a cell and requires a handover in order to not lose the connection to the network. Therefore, the ANR algorithm may be operating in different modes. At the initial stage, the UEs are triggered for measurement report at an earlier stage to allow for the completion of the ANR procedure before the UE moves out of coverage. On the other hand, at a more mature stage, the ANR measurements are less important since most neighbours are already detected.

The assumption for both ANR and MRO is that these are used to optimise the performance given certain coverage. It was designed with a static (or semi-static) coverage planning in mind. Recently, there have however been proposals to allow the cells to change the coverage dynamically. An example of this is when Adaptive Antenna Systems (AAS) allow cells to shrink if needed for capacity reasons. In one scenario, one cell could dynamically be replaced by a set of smaller cells. Similarly for Energy Saving (ES), there is a discussion on switching off one or more cells and compensate this by extending the coverage of one or more other cells and to do this depending on the load in the involved cells. The advantage would be to be able to reduce the energy consumption without affecting the total coverage of the system. These new proposals would result in quick and frequent changes to the coverage of the cells. Coverage may be changed by many means, such as transmit power adjustment, antenna tilt adjustment, antenna beam width adjustment, antenna main lobe adjustment in azimuth, etc.

But these frequent cell coverage changes may cause negative effects in the system. If no optimisation algorithm is used, such as MRO and ANR, the neighbour cell(s) will not be able to adapt to the new cell coverage situation. If mobility optimisation algorithm, such as MRO and ANR, is used and the coverage changes the optimisation algorithm has to adjust to the new coverage, which may take long time. With frequent cell changes, the optimisation algorithm may even not be able to find the optimal values before the next change is introduced. This would lead to suboptimal behaviour of the network.

Normally a UE in active mode in a cellular wireless network is handed over from one cell to the next as it moves through the network, and data can be transmitted and received without significant interruptions due to these handovers. The handover (HO) procedure can consist of many steps. In most cellular wireless systems the handover is: network controlled, i.e. the UE is commanded by the network when to connect to another cell, prepared, i.e. the target cell (the cell that UE is moving to) is prepared, UE assisted, i.e. the UE provides measurement reports before handover, to the serving cell to assist the decision to do handover preparation of target cell(s), and when to leave the serving cell/connect to the target cell.

In the context of handover, the serving cell before HO is often referred to as the source cell. After successful HO the target cell becomes the new serving cell. In LTE the handover is a "hard handover": the UE radio link is switched from one cell (source) to another (target). In UMTS hard handovers are used exclusively for TDD mode and may be used for FDD mode too. The handover is initially triggered by a measurement report sent from the UE to the serving eNB. The serving eNB configures how the UE shall take measurements and under what conditions a measurement report shall be triggered and sent to the eNB. To assist mobility control decisions, the UE can measure several cells and report the results to the network. Different networks and network deployments can have different detailed behaviour, but in most networks it is natural to trigger handover when signal reception from target cell is better than from source cell.

For the case of intra-frequency HO in a reuse-one system (source cell and target cell uses exactly the same frequency resources), there are strong interference management benefits in keeping the UE always connected to the best cell. In the measurement report the UE includes the reason for the trigger (e.g. target cell stronger than serving cell) and measurements of the reference signal strength (RSRP) or quality (RSRQ) of the serving cell and several neighbours (including the target cell).

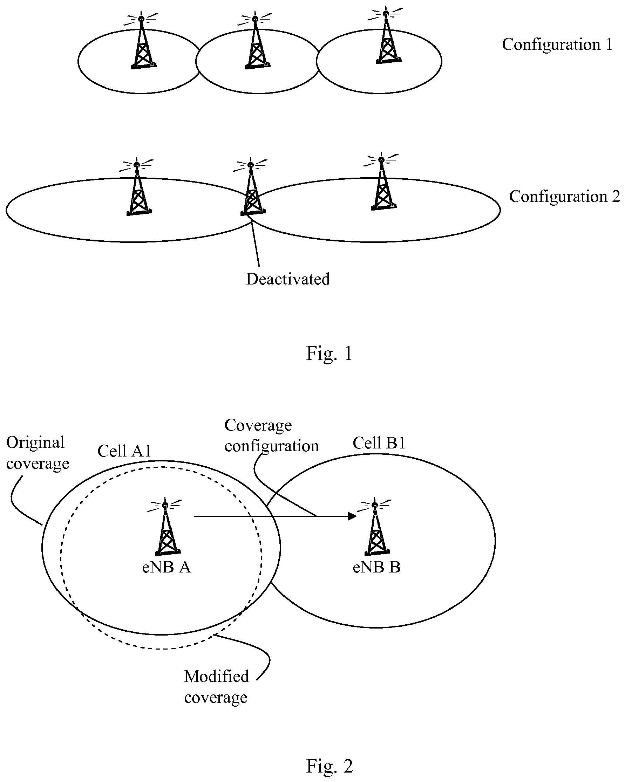

It may be beneficial during ES to let one or more cells compensate for one or more cells switching off. One solution is to use a centralised configuration architecture and let the OAM configure a set of different configurations, for example, antenna tilts, applicable to different scenarios with different cells being activated and deactivated. This is depicted in Figure 1. In this type of solution, the OAM is responsible for setting the parameters (e.g. tilt) in such a way that optimal coverage is achieved. The selection between these preconfigured sets can either be performed in the OAM, but it can also be performed in the eNBs. In the latter case, the OAM would have to transmit the different parameter sets to each eNB beforehand. The problem identified above arises every time the coverage of a cell is modified.

Another possible solution is to use a distributed configuration architecture and not to rely on centrally configured multiple sets of parameter configurations, but rather leave the coverage optimisation to each eNB. The problem identified above for ANR and MRO arises every time the coverage of a cell is modified. But also, in addition to the previously identified problem, the modified coverage mat cause coverage holes or extensive overlap.

Similar solutions would apply for AAS since this problem scenario is very similar: the coverage of individual cells is modified but the combined coverage should remain the same. One example of this is cell splitting. In this scenario, one first cell is split into two cells, covering the same area as the first cell. But the same scenario as in figure 1 can be considered, where two cells are split into three cells (Configuration 2 -> Configuration 1).

In a related prior art solution for signalling a switch command is presented. The idea is to send a switching signal to neighbour cells. This prior art does not however discuss more elaborate solutions to convey changes to coverage configurations. The switch command is currently partly supported in the 3GPP specifications, where an eNB may send an activation message to eNBs handling neighbour cells, thereby requesting that the deactivated cells are activated. The purpose of this is to reduce the load in the compensating cell of the sender eNB. In the current specification [3GPP, 36.423] there is also a deactivation indication message between eNBs, which can be used to indicate that a cell is switched off due to energy saving. But there is currently no information included to resolve the two identified problems above.

### Summary of the Invention

The invention is defined in the appended set of claims.

An object of the present invention is to provide a solution which mitigates or solves the drawbacks and problems of prior art solutions.

Another object of the invention is to provide a solution which mitigates or solves the impact of dynamically changing cell coverage in cellular systems such as LTE.

In a first aspect a method for transmitting and receiving information in a cellular wireless communication system is provided, said cellular wireless communication system comprising:
- a first network control node arranged for controlling at least one first cell of said cellular wireless communication system,
- a second network control node arranged for controlling at least one second cell of said cellular wireless communication system,
   wherein the first network control node is a first base station, and the second network control node is a second base station,
said method comprising the steps of:
- transmitting, by said first network control node, a cell coverage indicator indicating a cell coverage for said first cell to said second network control node,
- receiving, by said second network control node, said cell coverage indicator,
- using, by said second network control node, said cell coverage indicator for adjusting one or more radio resource management parameters associated with said second cell, wherein the one or more radio resource management parameters are mobility parameters, wherein the mobility parameters are anyone of a group comprising: a cell individual offset, handover candidate cells, a handover trigger, and a detected neighboring cell list.

In a first implementation form of the first aspect said second network control node employs a mobility parameter optimisation algorithm; and said method further comprises the step of:
storing, by the second network control node, a state of said algorithm based on a previously received cell coverage indicator.

In a second implementation form of the first aspect said step of using further involves: using said cell coverage indicator for retrieving said algorithm state.

In a third implementation form of the first aspect said algorithm state comprises information relating to one or more in the group comprising: mobility measurements from mobile stations connected to said second cell, statistics related to handovers to or from said second cell, time period for said collected statistics, history of mobility parameter adjustments, current mobility parameter configuration, and time period since last adjustment of said algorithm.

In a fourth implementation form of the first aspect said algorithm is any of Mobility Robustness Optimisation, MRO, or Automatic Neighbour Relation, ANR.

In a fifth implementation form of the first aspect said cell coverage indicator relates to at least one uplink and/or downlink signal parameter for said first cell.

In a sixth implementation form of the first aspect said cell coverage indicator is represented by one or more numerical values.

In a seventh implementation form of the first aspect said one or more numerical values relates to a cell coverage configuration mode for said first cell.

In an eighth implementation form of the first aspect said one or more numerical values relates to one or more in the group comprising: output power in said first cell, cell radius of said first cell, coverage overlap, antenna tilt, and antenna beam width.

In an ninth implementation form of the first aspect said cell coverage indicator indicates a present, intended, or a proposed cell coverage of said first cell.

In a tenth implementation form of the first aspect the method further comprises: transmitting, by said second network control node, a response to said cell coverage indicator, wherein said response comprises a cell coverage instruction for said first cell,
receiving, by said first network control node, said response, and
configuring, by said first network control node, a cell coverage of said first cell based on said response.

In an eleventh implementation form of the first aspect said first network control node controls at least two first cells being arranged, alone or together, to form different cell coverage configurations, and wherein said cell coverage indicator is transmitted in the form of a cell state message indicating a cell coverage configuration.

In a twelfth implementation form of the first aspect said at least two first cells have a common physical cell identity, PCI, or a global cell identity, ECGI.

In a thirteenth implementation form of the first aspect different cell coverage configurations are achieved by activating/deactivating cells, and said cell state message indicates activation/deactivation status of said at least two first cells.

In a fourteenth implementation form of the first aspect said cell state message further indicates whether a coverage of a deactivated cell will be replaced by another cell(s).

In a fifteenth implementation form of the first aspect said cell state message further indicates the identity of the replacing cell(s).

In a sixteenth implementation form of the first aspect said step of transmitting said cell coverage indicator involves:
transmitting said cell coverage indicator to a restricted number of second cells based on one or more radio resource management parameters associated with said first cell; or
transmitting said cell coverage indicator to a restricted number of second cells according to a predetermined address list configured by a network control node.

In a seventeenth implementation form of the first aspect said second network control node receives said cell coverage indicator by subscribing on said cell coverage indicator.

In a second aspect a method performed by a second network control node for receiving information in a cellular wireless communication system is provided, said cellular wireless communication system comprising:
- a first network control node arranged for controlling at least one first cell of said cellular wireless communication system,
- said second network control node arranged for controlling at least one second cell of said cellular wireless communication system;
   wherein the first network control node is a first base station, and the second network control node is a second base station,
said method comprising the steps of:
- receiving a cell coverage indicator indicating a cell coverage for said first cell from said first network control node,
- using said cell coverage indicator for adjusting one or more radio resource management parameters associated with said second cell, wherein the one or more radio resource management parameters are mobility parameters, wherein the mobility parameters are anyone of a group comprising: a cell individual offset, handover candidate cells, a handover trigger, and a detected neighboring cell list.

In a third aspect a computer program is provided, characterised in code means, which when run by processing means causes said processing means to execute said method according to any of the above mentioned methods.

In a fourth aspect a second network control node device arranged for receiving information in a cellular wireless communication system is provided, said cellular wireless communication system comprising:
- a first network control node arranged for controlling at least one first cell of said cellular wireless communication system,
- said second network control node device further arranged for controlling at least one second cell of said cellular wireless communication system,
   wherein the first network control node is a first base station, and the second network control node is a second base station,
wherein the second network control node is configured to perform the method according to the second aspect.

The present solution is based on the idea to exchange information regarding the coverage configuration between network control nodes in a cellular system. If one network control node intends or already has changed the coverage in one of its cells, the network control node informs other network control nodes in the system about this.

Thereby, the other network control nodes can use this information to reduce the impact by e.g. adjusting a mobility optimisation algorithm or adapt its own cell coverage. This result in improved performance of the cellular system, e.g. by reducing the number of dropped calls or the handover failure rate.

Further applications and advantages of the invention will be apparent from the following detailed description.

### Brief Description of the Drawings

The appended drawings are intended to clarify and explain different embodiments of the present invention in which:
- Fig. 1 illustrates two different cell coverage configurations;
- Fig. 2 shows an example of sending a cell coverage indicator from a first cell to a second cell; and
- Fig. 3 illustrates an embodiment of the invention;
- Fig.4 illustrates another embodiment of the invention;
- Fig. 5 shows an example of different coverage configurations;
- Fig. 6 shows another example of different coverage configurations;
- Fig. 7 shows an embodiment of the invention with a OAM node;
- Fig. 8 illustrates a subscription mechanism.

### Detailed Description of the Invention

To achieve the aforementioned and other objects, the present invention relates to a method in a cellular wireless communication system, such as a 3GPP LTE or LTE Advanced system. The present cellular system comprises at least a first network control node arranged for controlling at least one first cell, and at least a second network control node arranged for controlling at least one second cell. Controlling in this context means that the node is in control of the communication performed in a particular cell including the configuration of that cell and the handling of the resources of that cell.

The method step in the first transmit network control node is: transmitting a cell coverage indicator which indicates a cell coverage for the first cell to the second network control node. The cell coverage indicator is used to transfer information regarding the coverage of the first cell associated with the first control node. The information can e.g. be a scalar value enabling a second cell to distinguish between different configurations, a scalar value with internal relationship thereby enabling the second control node to understand the relative impact of the change, or as parameter(s) describing the coverage in a first cell in more detail.

The method steps in the second receive network control node are: receiving the cell coverage indicator from the first network control node; and using the cell coverage indicator for adjusting a cell coverage for the second cell and/or one or more radio resource management parameters associated with the second cell. Examples of adjusting the cell coverage includes adjusting the total output power, the power of a certain channel or the antenna tilt to avoid coverage holes or extensive coverage overlap introduced after changes to the coverage of the first cell. More examples are given below. Examples of adjusting radio resource management parameters may be mobility parameters so as to modifying the measurement configuration used for mobile station mobility such as thresholds, offsets or time-to-trigger values.

The first and second control nodes may be Base Station (BS) units arranged to control one or more cells each. Hence, a first BS sends the cell configuration indicator to the second BS in a suitable message by means of a suitable communication protocol. The transmission of the indicator can be performed using wired or wireless connections of combinations thereof.

Another solution is that a node in an OAM system is making the decision of the coverage configuration modification for the first cell(s). After making a decision to modify the coverage, the OAM node sends a new configuration to the first cell. This is already possible today, but in addition to this, a coverage configuration indicator can also be sent to the second control node. Hence, the first control node is according to this embodiment an OAM.

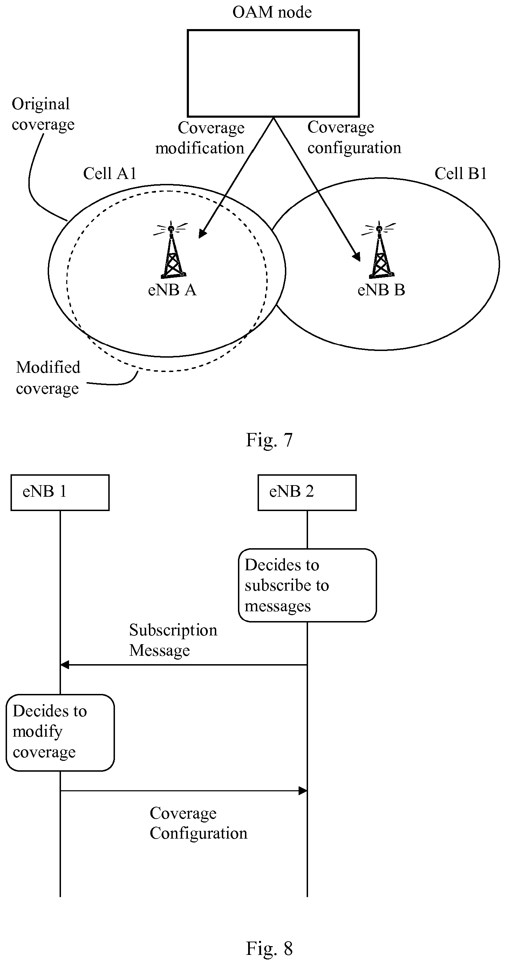

In an alternative solution, the decision of coverage modifications is located in a first BS. The BS that would like to modify the coverage informs OAM, which in turn notifies the neighbour BSs. The first step may also include a negotiation between the OAM and the BS that would like to modify the coverage. Hence, the OAM could be considered as only forwarding the cell coverage indicator. But it may be possible that the OAM configures the coverage or is informed of the new coverage in the form of radio parameters rather than the scalar value as discussed before. Therefore, there may also be a function in the OAM mapping from radio configuration into such a scalar value as outlined before. Figure 7 illustrates an embodiment with an OAM involved.

Furthermore, the one or more radio resource management parameters may be mobility parameters according to a further embodiment of the present invention. As mentioned earlier, different optimisation algorithm are used to optimise mobility parameter, e.g. MRO and ANR. The mobility parameters may be any in the group comprising: cell individual offset, handover candidate cells, handover trigger, and detected neighbour cell list.

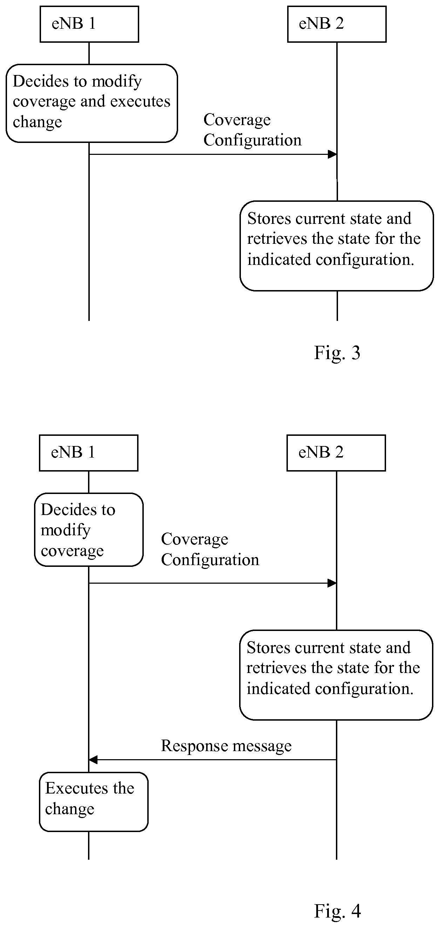

The second control node receiving the cell coverage indicator can use this to directly adjust the parameters of the algorithm. However, this information may also be used as an input to optimisation algorithms. One method is to use the information to change the operation of the algorithm, for example by triggering a more aggressive behaviour immediately after a coverage modification. Another method is to avoid restarting the optimisation algorithm in the second cell in an indirect way by modifying the algorithm that is used for optimisation. This can for example be achieved in the following way:
- The first control node changes from a current cell coverage configuration to a new configuration for one of its cells;
- The first control node sends an indication of a new cell coverage configuration to a second control node;
- The second control node stores the current state of the SON algorithms (used for the current configuration);
- The second control node retrieves a previous state of the SON algorithms (previously used for the indicated, new configuration);
- After retrieving the state of the SON algorithms, the SON algorithms can be restarted from this state. This is depicted in figure 3.

The second control node receiving the cell coverage information about the first cell may also use this information to adjust the coverage of one of the cells handled by this second control node. One example is if the first control node indicates a reduced coverage. The second control node may then consider increasing the coverage in one of the second cells.

The state of the optimisation algorithms, such as SON, may include: Optimised parameters (e.g. mobility parameters, neighbour lists); Collected statistics from events (e.g. handover failures, successful handovers, reported neighbours); Measurements reported by the mobile station (e.g. mobility measurements such as received signal strength of neighbour cells); Previous adjustments to the above mentioned parameters; and Time information (e.g. time since last adjustment, time stamp for each adjustment, time period for recorded statistics, time stamp for received mobile station measurements). Examples of SON algorithms (non exhaustive) are: ANR, MRO, MLB, but the present solution can be applied to any internal mobility optimisation algorithm in a control node of a wireless network.

Further, the cell coverage indicator can be sent before or after the change in the first cell actually took place. In some scenarios, it may be beneficial to notify after a change is introduced in the first cell. It may also be possible to send the indication beforehand, but inform the receiver when the change will take place. This could for example be achieved by always sending the indication 100 ms before the actual change is introduced. Other variants of this include attaching time information about when the change will be introduced so that the second control node exactly knows when the change will take place.

According to another embodiment of the invention a response message from the second cell can be added to the solutions described above. So in this embodiment, the method further comprises the steps of transmitting, by the second network control node, a response to the cell coverage indicator including a cell coverage instruction for the first cell, and further receiving, by the first network control node, the response, and configuring the cell coverage for the first cell based on the received response.

If a response is used as described above, the second control node may have the ability to effect the coverage decision in the first cell. One example is if the coverage modifications are not executed until after the response message is received. Thereby, the system supports the possibility that the second control node does not accept the coverage change in the first cell(s). Another variant of this is that the coverage configuration is delayed until the second control node is ready for the coverage change. In this solution, the second control node would receive the indication, perform some internal tasks, and then send a response message when it is ready to accept the suggested change from the first cell. This embodiment is depicted in figure 4. Other variant could include a time information part in the response message to indicate when the change should be performed.

According to another embodiment of the invention the first control node explicitly signals a cell coverage configuration value when the coverage has changed in the first cell. This value may for example be a value:
- indicating whether a cell coverage has changed, e.g. using YES/NO flag/semaphore,
- indicating the cell coverage configuration, e.g. [0..64];
- indicating the cell coverage configuration, e.g. [0..64] with an internal relationship between the scalar values, e.g. reflecting the:
   ∘ total number of cells,
   ∘ relative number of cells,
   ∘ the relative size of the cells;
- indicating the coverage configuration, with an absolute or relative representation of the:
   ∘ output power, e.g. [-32 dB..31dB],
   ∘ cell radius, e.g. [2000m, 1000m, 500m, 50m, 30m, 20m, 10m],
   ∘ coverage overlap, e.g. [-32 dB..31dB],
   ∘ Antenna tilt, e.g. [-10 degrees, ..., 10 degrees],
   ∘ Antenna azimuth, e.g. [0 degrees, ..., 360 degrees],
   ∘ Power of reference signals, e.g. [-32 dB..31dB],
   ∘ Power of common channels, e.g. [-32 dB..31dB].

An example of this is depicted in figure 2 where the first eNB A modifies the coverage in the first cell A1 and sends a coverage configuration indicator to the second cell B1 handled by second eNB B.

The cell coverage indicator value could for example be included in the served cell information [3GPP, 36.423] as shown in table 1 below.

**Table 1**

| **Served Cell Information** (9.2.8 in 36.423) | | | | | | |
|---|---|---|---|---|---|---|
| **IE/Group Name** | **Presence** | **Range** | **IE type and reference** | **Semantics description** | **Criticality** | **Assigned Criticality** |
| PCI | M | | INTEGER (0..503, ...) | Physical Cell ID | - | - |
| Cell ID | M | | ECGI 9.2.14 | | - | - |
| TAC | M | | OCTET STRING(2) | Tracking Area Code | - | - |
| ... | | | | | | |
| CoverageConfiguration | O | | INTEGER (0..63) | Indication of current coverage configuration | | |

Another solution is to re-use existing system mechanisms to indicate a cell coverage configuration. One example is to use the mechanisms introduced for energy saving. In energy saving, it is possible to mark certain cells as deactivated. This is done by sending a message over X2 where the state of one or more cells served by one eNB is marked as deactivated. This mechanism, combined with a scheme where a larger number of served cells (compared to the energy saving case) are defined can be used as a solution according to this embodiment. In this scheme, some of the cells are partly covering the same area. Hence, the idea is that only a certain set of cells should be enabled at the same time. The activated cells can be combined into different sets of cells, creating different coverage configurations.

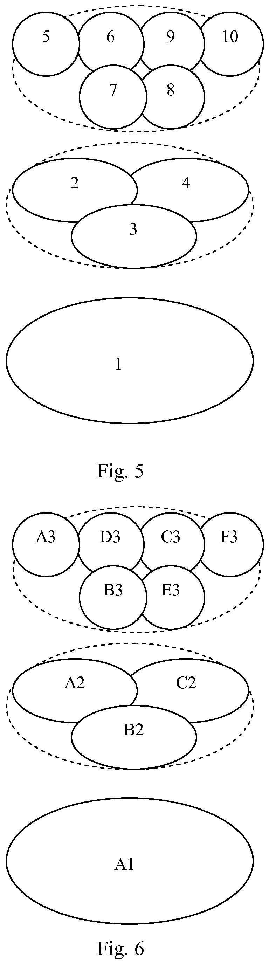

An example of this is illustrated in figure 5. As can be seen in this figure, a total of 10 cells are defined as being served by the first eNB. In this example, cell 5 covers part of cell 2. And cell 2 covers part of cell 1. Hence the idea is no to use any of cells 1, 2, or 5 simultaneously, but rather alternate between these cells depending on the capacity needed. The first eNB can then choose to enable and disable these different cells to achieve the desired configuration. For example, the first eNB may choose to enable only cell 1, or cell 2, 3, 9 and 10. As explained before this method would however typically not enable cells that share the same coverage area, such as enabling 1 and any of the other, or 2 and at the same time cell 5 and 6. By transferring this indicating of activated cells, the receiving second eNB can understand the current cell coverage configuration and take that into account.

One drawback of using this scheme is that it would be difficult or impossible to re-use the cell identities. Instead, separate identities must be used by this large set of configured cells. Two types of identities are usually defined: physical (PCI) or global (ECGI) cell identities. Physical cell identities are broadcasted more frequently and hence are of shorter length meaning smaller address space. Physical identities are therefore re-used in a typical system. But in order to avoid confusion, the physical addresses are planned or in other way selected such that the re-use occur far away. The benefit of re-using cell identities is that each eNB would not require many identities, hence making the task to avoid confusion with nearby cells an easier task (not using so many addresses means that more PCI are available for neighbour cells). The global identities have a larger address space and are unique in the system but are used by other nodes (core network and OAM system). Hence, re-using global identities would reduce the complexity for configuring and handling this multitude of global identities in other parts of the network. In addition to this, there may also be other properties of the cell that are beneficial to re-use in these duplicated cells, for example RACH parameters.

Using a similar example as above, an example is illustrated in figure 6. In this example, the cells A1, A2, and A3 are re-using the global and physical identities. The same is done for B2 and B3 and also C2 and C3. As a result only six global and physical identities must be configured (compared to 10 in the previous example).

As mentioned before, there is already one example of a deactivation indication, in the eNB configuration update message [3GPP, 36.423]. This message includes a deactivation indication which indicates that the cell is deactivated due to energy saving reasons. It is not intended to be used for using these duplicated identities as described above. So in order to distinguish between the previous usage of this message and this extended usage, it would be possible to also add a new value to indicate that these types of duplicated identities are used. This would enable the receiver to make correct judgement if any of the cell identities are re-used.

Further, it would be advantageous to also indicate which cells are replacing the deactivated cells according to an embodiment of the invention. If the coverage configuration has not been previously used, it would be important to inform the neighbours about the relationship between the configurations. This is especially beneficial if the distributed configuration architecture is used, since this would give a better understanding of the new cell coverage for the eNB receiving the indication. A possible way to signal this could therefore be to add the following to the eNB configuration update message in 3GPP 36.423 as shown in table 2:

**Table 2**

| ENB CONFIGURATION UPDATE (9.1.2.8 in 36.423) | | | | | | |
|---|---|---|---|---|---|---|
| **IE/Group Name** | **Presence** | **Range** | **IE type and reference** | **Semantics description** | **Criticality** | **Assigned Criticality** |
| **Served Cells To Modify** | | *0* <*maxCellineNB>* | | Complete list of modified cells served by the eNB | GLOBAL | reject |
| ... | | | | | | |
| >Deactivation Indication | O | | ENUMERA TED(deactiv ated, ..., compensated) | Indicates that the concerned cell is switched off for energy saving reasons or other reasons | YES | Ignore |
| >Covered by | C-ifCompensated | | ECGI 9.2.14 | E-UTRAN Cell Global Identifier providing compensating coverage | YES | ignore |

It should be noted that it may be beneficial to also include a list of ECGI of cells that are compensating the coverage of a deactivated cell.

In the solution so far, a solution where cells are compensating for a deactivated cell is indicated. It would also be possible to do the opposite: include a coverage configuration indication indicating which deactivated cells are presently covered by the compensating cell. A possible way to signal this alternative would be to add the following to the eNB configuration update message in 3 GPPP 36.423 as shown in Table 3 below.

**Table 3**

| ENB CONFIGURATION UPDATE (9.1.2.8 in 36.423) | | | | | | |
|---|---|---|---|---|---|---|
| **IE/Group Name** | **Presence** | **Range** | **IE type and reference** | **Semantics description** | **Criticality** | **Assigned Criticality** |
| **Served Cells To Modify** | | *0 <maxCellineN B>* | | Complete list of modified cells served by the eNB | GLOBAL | reject |
| ... | | | | | | |
| >Covers | O | | ECGI 9.2.14 | E-UTRAN Cell Global Identifier for cells now being covered by this cell | YES | ignore |

Also in this case it may be beneficial to also include a list of ECGI of the cells instead of a single value.

In yet another embodiment a mechanism to control which second control nodes that should receive the coverage configuration is introduced. It would be possible to send cell coverage indicators to all neighbour second control nodes, or to second control node which there is a communication link (X2) configured. But one second control node may handle a multitude of cells. It is not always the case that all cells handled by one second control node are neighbour to cells handled by another second control nodes. Therefore, it would be an improvement to restrict to which second control nodes these coverage configurations are sent.

One possible solution is to use internal statistics in the first control node transmitting the coverage indicator to decide which eNB should receive this indication. For example it would be possible to analyse the number of successful handovers between cells. If a second control node is handling cells to which there are very rare cases of successful handovers, the first control node may choose not to send configuration updates to this second control node. The threshold for when to start sending configuration messages may be set by OAM. Another solution is that OAM explicitly configures who to send configuration updates to.

Another possible solution is to have the selection decision in the second control node. The decision on whether the information is interesting can be made in a similar way as described above, but the second control node would then indicate to the transmitting first control node whether it is interested in receiving the cell configuration indicator. This can be achieved by introducing a type of subscription mechanism. Each second control node that would like to receive coverage configuration updates would send a subscription message to the first control node handling the cell that is changing. By doing this, the second control node indicates that it is interested in receiving these updates for one or more of the served cells. This indication could be used on either a control node/control node basis (sending/receiving) or a per receiving control node and modified cell basis (cell whose configuration has changed). And if the receiving control node is not active in coverage compensation and not employing optimisation that is related to overlapping coverage then it could indicate that no further messages regardless of the identity of the cell whose configuration has changed. This solution may be designed so that all control nodes are by default subscribing to these messages. But it is also possible to do the opposite, and assume that the default is that no one is subscribing to these messages until the explicitly subscribe to this. An example of the usage of such subscription mechanism is depicted in figure 8.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

The present invention also relates to first and second network control node devices. Mentioned devices are arranged for providing necessary functions and may therefore comprise suitable means, examples of which are: processing means, memory means, input means, output means, coupling means, transmitting means, receiving means, amplification means, D/A converting means, A/D converting means, network control means, etc.

Moreover, the first network control node device has transmitting means arranged for transmitting a cell coverage indicator indicating a cell coverage for a first cell to a second network control node. The first network control node device has further receiving means arranged for receiving the cell coverage indicator from the first network control node device, and processing means arranged for using the cell coverage indicator for adjusting a cell coverage for said second cell and/or one or more radio resource management parameters associated with a second cell of the second network control device. As mentioned above the first and second network control node devices may be modified so as to correspond to the different embodiments of the present method.

Finally, it should be understood that the present invention is not limited to the embodiments described above, but also relates to and incorporates all embodiments within the scope of the appended independent claims.

## Claims

1. Method for transmitting and receiving information in a cellular wireless communication system, said cellular wireless communication system comprising:
• a first network control node arranged for controlling at least one first cell of said cellular wireless communication system,
• a second network control node arranged for controlling at least one second cell of said cellular wireless communication system,
wherein the first network control node is a first base station, and the second network control node is a second base station,
said method comprising the steps of:
• transmitting, by said first network control node, a cell coverage indicator indicating a cell coverage for said first cell to said second network control node,
• receiving, by said second network control node, said cell coverage indicator,
• using, by said second network control node, said cell coverage indicator for adjusting one or more radio resource management parameters associated with said second cell, wherein the one or more radio resource management parameters are mobility parameters, wherein the mobility parameters are anyone or more in a group comprising: a cell individual offset, handover candidate cells, a handover trigger, and a detected neighboring cell list.

2. Method according to claim 1, wherein said second network control node employs a mobility parameter optimisation algorithm; and said method further comprises the step of:
storing, by the second network control node, a state of said algorithm based on a previously received cell coverage indicator.

3. Method according to claim 2, wherein said step of using further involves:
using said cell coverage indicator for retrieving said algorithm state.

4. Method according to claim 3, wherein said algorithm state comprises information relating to one or more in the group comprising: mobility measurements from mobile stations connected to said second cell, statistics related to handovers to or from said second cell, time period for said collected statistics, history of mobility parameter adjustments, current mobility parameter configuration, and time period since last adjustment of said algorithm.

5. Method according to claim 2, wherein said algorithm is any of Mobility Robustness Optimisation, MRO, or Automatic Neighbour Relation, ANR.

6. Method according to claim 1, wherein said cell coverage indicator relates to at least one uplink and/or downlink signal parameter for said first cell.

7. Method according to claim 6, wherein said cell coverage indicator is represented by one or more numerical values.

8. Method according to claim 7, wherein said one or more numerical values relates to a cell coverage configuration mode for said first cell.

9. Method according to claim 7, wherein said one or more numerical values relates to one or more in the group comprising: output power in said first cell, cell radius of said first cell, coverage overlap, antenna tilt, and antenna beam width.

10. Method according to claim 1, wherein said cell coverage indicator indicates a present, intended, or a proposed cell coverage of said first cell.

11. Method according to claim 1, further comprising the steps of:
transmitting, by said second network control node, a response to said cell coverage indicator, wherein said response comprises a cell coverage instruction for said first cell.

12. Method according to claim 1, wherein said first network control node controls at least two first cells being arranged, alone or together, to form different cell coverage configurations, and wherein said cell coverage indicator is transmitted in the form of a cell state message indicating a cell coverage configuration.

13. Method according to claim 12, wherein said at least two first cells have a common physical cell identity, PCI, or a global cell identity, ECGI.

14. Method according to claim 12, wherein different cell coverage configurations are achieved by activating/deactivating cells, and said cell state message indicates activation/deactivation status of said at least two first cells.

15. Method according to claim 14 wherein said cell state message further indicates whether a coverage of a deactivated cell will be replaced by another cell(s).

16. Method according to claim 15, wherein said cell state message further indicates the identity of the replacing cell(s).

17. Method according to claim 1, wherein said step of transmitting said cell coverage indicator involves:
transmitting said cell coverage indicator to a restricted number of second cells based on one or more radio resource management parameters associated with said first cell; or
transmitting said cell coverage indicator to a restricted number of second cells according to a predetermined address list configured by a network control node.

18. Method according to claim 1, wherein said second network control node receives said cell coverage indicator by subscribing on said cell coverage indicator.

19. Method performed by a second network control node for receiving information in a cellular wireless communication system, said cellular wireless communication system comprising:
• a first network control node arranged for controlling at least one first cell of said cellular wireless communication system,
• said second network control node arranged for controlling at least one second cell of said cellular wireless communication system;
wherein the first network control node is a first base station, and the second network control node is a second base station,
said method comprising the steps of:
• receiving a cell coverage indicator indicating a cell coverage for said first cell from said first network control node,
• using said cell coverage indicator for adjusting one or more radio resource management parameters associated with said second cell, wherein the one or more radio resource management parameters are mobility parameters, wherein the mobility parameters are anyone or more in a group comprising: a cell individual offset, handover candidate cells, a handover trigger, and a detected neighboring cell list.

20. Computer program comprising instructions which, when the program is executed by a computer of a second base station causes base station to execute said method according to any of claims 1-19.

21. Second network control node device arranged for receiving information in a cellular wireless communication system, said cellular wireless communication system comprising:
• a first network control node arranged for controlling at least one first cell of said cellular wireless communication system,
• said second network control node device further arranged for controlling at least one second cell of said cellular wireless communication system,
wherein the first network control node is a first base station, and the second network control node is a second base station,
wherein the second network control node is configured to perform the method according to claim 19.

## Patentansprüche

1. Verfahren zum Senden und Empfangen von Informationen in einem zellularen drahtlosen Kommunikationssystem, wobei das zellulare drahtlose Kommunikationssystem umfasst:
- einen ersten Netzwerksteuerknoten, der geeignet ist zum Steuern mindestens einer ersten Zelle des zellularen drahtlosen Kommunikationssystems,
- einen zweiten Netzwerksteuerknoten, der geeignet ist zum Steuern mindestens einer zweiten Zelle des zellularen drahtlosen Kommunikationssystems, wobei der erste Netzwerksteuerknoten eine erste Basisstation ist, und der zweite Netzwerksteuerknoten eine zweite Basisstation ist,
wobei das Verfahren die folgenden Schritte umfasst:
- Senden eines Zellenabdeckungsindikators, der eine Zellenabdeckung für die erste Zelle anzeigt, von dem ersten Netzwerksteuerknoten an den zweiten Netzwerksteuerknoten,
- Empfangen des Zellenabdeckungsindikators in dem zweiten Netzwerksteuerknoten,
- Verwenden, durch den zweiten Netzwerksteuerknoten, des Zellenabdeckungsindikators zum Anpassen eines oder mehrerer Funkressourcenverwaltungsparameter, die der zweiten Zelle zugeordnet sind, wobei der eine oder die mehreren Funkressourcenverwaltungsparameter Mobilitätsparameter sind, wobei die Mobilitätsparameter einer oder mehrere in einer Gruppe sind, die umfasst: einen individuellen Zellen-Offset, Übergabekandidatenzellen, einen Übergabetrigger und eine erkannte Nachbarzellenliste.

2. Verfahren nach Anspruch 1, wobei der zweite Netzwerksteuerknoten einen Mobilitätsparameteroptimierungsalgorithmus einsetzt und wobei das Verfahren außerdem den folgenden Schritt umfasst:
Speichern, in dem zweiten Netzwerksteuerknoten, eines Zustands des Algorithmus aufgrund eines zuvor empfangenen Zellenabdeckungsindikators.

3. Verfahren nach Anspruch 2, wobei der Schritt des Verwendens außerdem beinhaltet:
Verwenden des Zellenabdeckungsindikators zum Abrufen des Algorithmuszustands.

4. Verfahren nach Anspruch 3, wobei der Algorithmuszustand Informationen umfasst, die sich auf eine oder mehrere in der Gruppe beziehen, die umfasst: Mobilitätsmessungen von Mobilfunkstationen, die mit der zweiten Zelle verbunden sind, Statistiken in Bezug auf Übergaben an die, oder von der zweiten Zelle, einen Zeitraum für die erfasste Statistik, eine Historie der Mobilitätsparameteranpassungen, eine aktuelle Mobilitätsparameterkonfiguration und eine Zeitdauer, seit der letzten Anpassung des Algorithmus.

5. Verfahren nach Anspruch 2, wobei der Algorithmus einer von einer Mobilitätsbelastbarkeitsoptimierung (Mobility Robustness Optimisation, MRO) oder einer automatischen Nachbarbeziehung (Automatic Neighbour Relation, ANR) ist.

6. Verfahren nach Anspruch 1, wobei sich der Zellenabdeckungsindikator auf mindestens einen Uplink- und/oder Downlink-Signalparameter für die erste Zelle bezieht.

7. Verfahren nach Anspruch 6, wobei der Zellenabdeckungsindikator durch einen oder mehrere numerische Werte dargestellt wird.

8. Verfahren nach Anspruch 7, wobei sich der eine oder die mehreren numerischen Werte auf einen Zellenabdeckungskonfigurationsmodus für die erste Zelle beziehen.

9. Verfahren nach Anspruch 7, wobei sich der eine oder die mehreren numerischen Werte auf einen oder mehrere in der Gruppe beziehen, die umfasst: eine Ausgangsleistung in der ersten Zelle, einen Zellenradius der ersten Zelle, eine Abdeckungsüberschneidung, eine Antennenneigung und einen Antennenöffnungswinkel.

10. Verfahren nach Anspruch 1, wobei der Zellenabdeckungsindikator eine vorhandene, eine vorgesehene oder eine vorgeschlagene Zellenabdeckung der ersten Zelle anzeigt.

11. Verfahren nach Anspruch 1, das außerdem die folgenden Schritte umfasst:
Senden einer Antwort auf den Zellenabdeckungsindikator von dem zweiten Netzwerksteuerknoten, wobei die Antwort einen Zellenabdeckungsbefehl für die erste Zelle umfasst.

12. Verfahren nach Anspruch 1, wobei der erste Netzwerksteuerknoten mindestens zwei erste Zellen steuert, die einzeln oder zusammen angeordnet sind, um unterschiedliche Zellenabdeckungskonfigurationen zu bilden, und wobei der Zellenabdeckungsindikator in der Form einer Zellenzustandsnachricht gesendet wird, die eine Zellenabdeckungskonfiguration anzeigt.

13. Verfahren nach Anspruch 12, wobei die mindestens zwei ersten Zellen eine gemeinsame physische Zellenkennung (Physical Cell Identity, PCI) oder eine globale Zellenkennung (Global Cell Identity, ECGI) aufweisen.

14. Verfahren nach Anspruch 12, wobei unterschiedliche Zellenabdeckungskonfigurationen erreicht werden, indem Zellen aktiviert oder deaktiviert werden, und wobei die Zellenzustandsnachricht einen Aktivierungs-/Deaktivierungszustand der mindestens zwei ersten Zellen anzeigt.

15. Verfahren nach Anspruch 14, wobei die Zellenzustandsnachricht außerdem anzeigt, ob eine Abdeckung einer deaktivierten Zelle durch eine oder mehrere andere Zellen ersetzt wird.

16. Verfahren nach Anspruch 15, wobei die Zellenzustandsnachricht außerdem die Kennung der ersetzenden Zelle(n) anzeigt.

17. Verfahren nach Anspruch 1, wobei der Schritt des Sendens des Zellenabdeckungsindikators beinhaltet:
Senden des Zellenabdeckungsindikators an eine begrenzte Anzahl von zweiten Zellen aufgrund eines oder mehrerer Funkressourcenverwaltungsparameter, die der ersten Zelle zugeordnet sind; oder
Senden des Zellenabdeckungsindikators an eine begrenzte Anzahl von zweiten Zellen aufgrund einer vorbestimmten Adressliste, die von einem Netzwerksteuerknoten konfiguriert wird.

18. Verfahren nach Anspruch 1, wobei der zweite Netzwerksteuerknoten den Zellenabdeckungsindikator empfängt, indem er sich bei dem Zellenabdeckungsindikator anmeldet.

19. Verfahren, das von einem zweiten Netzwerksteuerknoten zum Empfangen von Informationen in einem zellularen drahtlosen Kommunikationssystem ausgeführt wird, wobei das zellulare drahtlose Kommunikationssystem umfasst:
- einen ersten Netzwerksteuerknoten, der geeignet ist zum Steuern mindestens einer ersten Zelle des zellularen drahtlosen Kommunikationssystems,
- den zweiten Netzwerksteuerknoten, der geeignet ist zum Steuern mindestens einer zweiten Zelle des zellularen drahtlosen Kommunikationssystems,
wobei der erste Netzwerksteuerknoten eine erste Basisstation ist, und der zweite Netzwerksteuerknoten eine zweite Basisstation ist,
wobei das Verfahren die folgenden Schritte umfasst:
- Empfangen von dem ersten Netzwerksteuerknoten eines Zellenabdeckungsindikators, der eine Zellenabdeckung für die erste Zelle anzeigt,
- Verwenden des Zellenabdeckungsindikators zum Anpassen eines oder mehrerer Funkressourcenverwaltungsparameter, die der zweiten Zelle zugeordnet sind, wobei der eine oder die mehreren Funkressourcenverwaltungsparameter Mobilitätsparameter sind, wobei die Mobilitätsparameter einer oder mehrere in einer Gruppe sind, die umfasst: einen individuellen Zellen-Offset, Übergabekandidatenzellen, einen Übergabetrigger und eine erkannte Nachbarzellenliste.

20. Computerprogramm, das Befehle umfasst, die, wenn das Programm von einem Computer einer zweiten Basisstation ausgeführt wird, die Basisstation veranlassen, das Verfahren nach einem der Ansprüche 1 bis 19 auszuführen.

21. Zweite Netzwerksteuerknotenvorrichtung, die geeignet ist zum Empfangen von Informationen in einem zellularen drahtlosen Kommunikationssystem, wobei das zellulare drahtlose Kommunikationssystem umfasst:
- einen ersten Netzwerksteuerknoten, der geeignet ist zum Steuern mindestens einer ersten Zelle des zellularen drahtlosen Kommunikationssystems,
- wobei die zweite Netzwerksteuerknotenvorrichtung außerdem geeignet ist zum Steuern mindestens einer zweiten Zelle des zellularen drahtlosen Kommunikationssystems,
wobei der erste Netzwerksteuerknoten eine erste Basisstation ist, und der zweite Netzwerksteuerknoten eine zweite Basisstation ist,
wobei der zweite Netzwerksteuerknoten konfiguriert ist zum Ausführen des Verfahrens nach Anspruch 19.

## Revendications

1. Procédé pour transmettre et recevoir des informations dans un système de communication cellulaire sans fil, ledit système de communication cellulaire sans fil comprenant :
• un premier nœud de commande de réseau conçu pour commander au moins une première cellule dudit système de communication cellulaire sans fil,
• un second nœud de commande de réseau conçu pour commander au moins une seconde cellule dudit système de communication cellulaire sans fil,
dans lequel le premier nœud de commande de réseau est une première station de base et le second nœud de commande de réseau est une seconde station de base,
ledit procédé comprenant les étapes consistant :
• à transmettre, au moyen dudit premier nœud de commande de réseau, un indicateur de couverture de cellule indiquant une couverture de cellule pour ladite première cellule au dit second nœud de commande de réseau,
• à recevoir, au moyen dudit second nœud de commande de réseau, ledit indicateur de couverture de cellule,
• à utiliser, au moyen dudit second nœud de commande de réseau, ledit indicateur de couverture de cellule pour régler un ou plusieurs paramètres de gestion de ressources radio associés à ladite seconde cellule, dans lequel le ou les paramètres de gestion de ressources radio sont des paramètres de mobilité, dans lequel les paramètres de mobilité sont l'un quelconque ou plusieurs éléments dans un groupe comprenant : un décalage individuel de cellule, des cellules candidates de transfert intercellulaire, un déclencheur de transfert intercellulaire et une liste de cellules voisines détectées.

2. Procédé selon la revendication 1, dans lequel ledit second nœud de commande de réseau emploie un algorithme d'optimisation de paramètre de mobilité ; et ledit procédé comprend en outre les étapes consistant :
à stocker, au moyen du second nœud de commande de réseau, un état dudit algorithme en se basant sur un indicateur de couverture de cellule reçu auparavant.

3. Procédé selon la revendication 2, dans lequel ladite étape d'utilisation implique en outre :
l'utilisation dudit indicateur de couverture de cellule pour récupérer ledit état d'algorithme.

4. Procédé selon la revendication 3, dans lequel ledit état d'algorithme comporte des informations se rapportant à un ou plusieurs éléments dans le groupe comprenant : des mesures de mobilité à partir de stations mobiles connectées à ladite seconde cellule, des statistiques se rapportant à des transferts intercellulaires vers ladite seconde cellule ou à partir de cette dernière, une période de temps pour lesdites statistiques collectées, un historique de réglages de paramètre de mobilité, une configuration de paramètre de mobilité actuelle et une période de temps depuis le dernier réglage dudit algorithme.

5. Procédé selon la revendication 2, dans lequel ledit algorithme est soit une optimisation de robustesse de mobilité (MRO), soit une relation de voisinage automatique (ANR).

6. Procédé selon la revendication 1, dans lequel ledit indicateur de couverture de cellule se rapporte à au moins un paramètre de signal de liaison montante et/ou de liaison descendante pour ladite première cellule.

7. Procédé selon la revendication 6, dans lequel ledit indicateur de couverture de cellule est représenté par une ou plusieurs valeurs numériques.

8. Procédé selon la revendication 7, dans lequel ladite ou lesdites valeurs numériques se rapportent à un mode de configuration de couverture de cellule pour ladite première cellule.

9. Procédé selon la revendication 7, dans lequel ladite ou lesdites valeurs numériques se rapportent à un ou plusieurs éléments dans le groupe comprenant : une puissance de sortie dans ladite première cellule, un rayon de cellule de ladite première cellule, un chevauchement de la couverture, une inclinaison d'antenne et une largeur de faisceau d'antenne.

10. Procédé selon la revendication 1, dans lequel ledit indicateur de couverture de cellule indique une couverture de cellule actuelle, voulue ou proposée de ladite première cellule.

11. Procédé selon la revendication 1, comprenant en outre les étapes consistant :
à transmettre, au moyen dudit second nœud de commande de réseau, une réponse au dit indicateur de couverture de cellule, dans lequel ladite réponse comprend une instruction de couverture de cellule pour ladite première cellule.

12. Procédé selon la revendication 1, dans lequel ledit premier nœud de commande de réseau commande au moins deux premières cellules qui sont conçues, seules ou ensemble, pour former différentes configurations de couverture de cellule et dans lequel ledit indicateur de couverture de cellule est transmis sous la forme d'un message d'état de cellule indiquant une configuration de couverture de cellule.

13. Procédé selon la revendication 12, dans lequel lesdites deux, ou plus, premières cellules possèdent une identité de cellule physique commune (PCI) ou une identité de cellule globale (ECGI).

14. Procédé selon la revendication 12, dans lequel différentes configurations de couverture de cellule sont obtenues en activant/désactivant des cellules et ledit message d'état de cellule indique un état d'activation/de désactivation desdites deux, ou plus, premières cellules.

15. Procédé selon la revendication 14, dans lequel ledit message d'état de cellule indique en outre si une couverture d'une cellule désactivée sera remplacée par une ou plusieurs autres cellules.

16. Procédé selon la revendication 15, dans lequel ledit message d'état de cellule indique en outre l'identité de la ou des cellules de remplacement.

17. Procédé selon la revendication 1, dans lequel ladite étape de transmission dudit indicateur de couverture de cellule implique :
la transmission dudit indicateur de couverture de cellule à un nombre limité de secondes cellules en se basant sur un ou plusieurs paramètres de gestion de ressources radio associés à ladite première cellule ; ou
la transmission dudit indicateur de couverture de cellule à un nombre limité de secondes cellules en fonction d'une liste d'adresses prédéterminée configurée par un nœud de commande de réseau.

18. Procédé selon la revendication 1, dans lequel ledit second nœud de commande de réseau reçoit ledit indicateur de couverture de cellule en s'abonnant au dit indicateur de couverture de cellule.

19. Procédé réalisé par un second nœud de commande de réseau pour recevoir des informations dans un système de communication cellulaire sans fil, ledit système de communication cellulaire sans fil comprenant :
• un premier nœud de commande de réseau conçu pour commander au moins une première cellule dudit système de communication cellulaire sans fil,
• ledit second nœud de commande de réseau conçu pour commander au moins une seconde cellule dudit système de communication cellulaire sans fil ;
dans lequel le premier nœud de commande de réseau est une première station de base et le second nœud de commande de réseau est une seconde station de base,
ledit procédé comprenant les étapes consistant :
• à recevoir un indicateur de couverture de cellule indiquant une couverture de cellule pour ladite première cellule en provenance dudit premier nœud de commande de réseau,
• à utiliser ledit indicateur de couverture de cellule pour régler un ou plusieurs paramètres de gestion de ressources radio associés à ladite seconde cellule, dans lequel le ou les paramètres de gestion de ressources radio sont des paramètres de mobilité, dans lequel les paramètres de mobilité sont l'un quelconque ou plusieurs éléments dans un groupe comprenant : un décalage individuel de cellule, des cellules candidates de transfert intercellulaire, un déclencheur de transfert intercellulaire et une liste de cellules voisines détectées.

20. Programme d'ordinateur comprenant des instructions qui, lorsque le programme est exécuté par un ordinateur d'une seconde station de base, contraignent la station de base à exécuter ledit procédé selon l'une quelconque des revendications 1 à 19.

21. Second dispositif de nœud de commande de réseau conçu pour recevoir des informations dans un système de communication cellulaire sans fil, ledit système de communication cellulaire sans fil comprenant :
• un premier nœud de commande de réseau conçu pour commander au moins une première cellule dudit système de communication cellulaire sans fil,
• ledit second dispositif de nœud de commande de réseau étant en outre conçu pour commander au moins une seconde cellule dudit système de communication cellulaire sans fil ;
dans lequel le premier nœud de commande de réseau est une première station de base et le second nœud de commande de réseau est une seconde station de base,
dans lequel le second nœud de commande de réseau est configuré pour réaliser le procédé selon la revendication 19.
